# EUROPEAN PATENT APPLICATION

(11) **EP 4 654 618 A1**
(43) Date of publication of application: **26.11.2025**
(21) Application number: 23916666.3
(22) Date of filing: 16.01.2023
(51) Int. Cl.: H04W 4/02

(54) **POSITIONING PROCESSING METHODS, APPARATUS, COMMUNICATION DEVICE AND STORAGE MEDIUM**

(71) Applicant: Beijing Xiaomi Mobile Software Co., Ltd., Beijing 100085 (CN)
(72) Inventor: SHEN, Yang, Beijing 100085 (CN); WANG, Xinli, Beijing 100085 (CN)
(74) Representative: Dehns Germany Partnerschaft mbB
(86) International application number: PCT/CN2023/072463
(87) International publication number: WO 2024/152175

(57) **Abstract**

Provided in the embodiments of the present disclosure are positioning processing methods, an apparatus, a communication device, and a storage medium. A positioning processing method is executed by an AMF, and comprises: sending a first request to an LMF, wherein the first request is used for requesting position information of a first UE, the first request comprises identification information of at least one candidate UE, and the candidate UE is used for determining a second UE for SL positioning of the first UE.

## Description

### TECHNICAL FIELD

The disclosure relates to, but is not limited to, a field of communication technologies, and in particular to a positioning method, a positioning apparatus, a communication device and a storage medium.

### BACKGROUND

In a wireless communication system, for example, in a fifth generation mobile communication system (5G), some user equipments (UEs) are within the 5G coverage, and some UEs are outside the 5G coverage. Ranging service can be supported regardless of whether the UE is within 5G coverage or not. The ranging service refers to a determination of a distance between two UEs and/or a direction of one UE from the other one via direct communication connection.

However, in related arts of absolute location of a target UE by means of sidelink (SL) positioning, it is still unclear how to determine a located UE when locating the target UE within the coverage.

### SUMMARY

The embodiments of the disclosure provide a positioning method, a positioning apparatus, a communication device and a storage medium.

According to a first aspect of embodiments of the disclosure, a positioning method is provided. The method is performed by an access and mobility management function (AMF), and includes:

sending a first request to a location management function (LMF), in which the first request is used for requesting position information of a first UE, the first request includes identifier information of at least one candidate UE, and the at least one candidate UE is used to determine a second UE for SL positioning of the first UE.

In some embodiments, the method further includes: receiving a second request sent by a first device, in which the second request is used for requesting the position information of the first UE.

In some embodiments, the first device includes a location service (LCS) client or an application function (AF).

In some embodiments, the method includes: receiving a first response sent by the LMF, in which the first response includes first positioning information, and the first positioning information indicates the position information of the first UE.

In some embodiments, the method includes: determining the LMF based on first information, in which the first information includes available information and/or local configuration.

According to a second aspect of embodiments of the disclosure, a positioning method is provided. The method is performed by an LMF, and includes:
receiving a first request sent by an AMF, in which the first request is used for requesting position information of a first UE, the first request includes identifier information of at least one candidate UE, and the at least one candidate UE is used to determine a second UE for SL positioning of the first UE.

According to a third aspect of embodiments of the disclosure, a positioning method is provided. The method is performed by a first UE, and includes:
receiving a first request sent by an LMF, in which the first request is used for requesting position information of the first UE, the first request includes identifier information of at least one candidate UE, and the at least one candidate UE is used to determine a second UE for SL positioning of the first UE.

In some embodiments, the method includes: determine the second UE related with the SL positioning based on the identifier information of the at least one candidate UE.

In some embodiments, the method includes: obtaining second positioning information based on the SL positioning related with the second UE, in which the second positioning information indicates relative position information between the first UE and the second UE.

In some embodiments, the method includes: sending the second positioning information and identifier information of the second UE corresponding to the second positioning information to the LMF.

According to a fourth aspect of embodiments of the disclosure, a positioning method is provided. The method is performed by a core network element, and includes:
sending a first request to a first UE, in which the first request is used for requesting position information of the first UE, the first request includes identifier information of at least one candidate UE, and the at least one candidate UE is used to determine a second UE for SL positioning of the first UE.

In some embodiments, the method includes: receiving second positioning information and identifier information of the second UE corresponding to the second positioning information sent by the first UE, in which the second positioning information indicates relative position information between the first UE and the second UE.

In some embodiments, the method includes: determining first positioning information of the first UE based on the second positioning information and third positioning information, in which the third positioning information indicates position information of the second UE, and the first positioning information indicates the position information of the first UE.

In some embodiments, the method includes: sending a first response to a first device, in which the first response includes the first positioning information, or the first response includes the first positioning information and the identifier information of the second UE.

In some embodiments, before sending the first request to the first UE, the method further includes: receiving a second request sent by the first device, in which the second request is used for requesting the position information of the first UE.

In some embodiments, the first device includes a LCS client or an AF.

According to a fifth aspect of embodiments of the disclosure, a positioning apparatus is provided. The apparatus includes:
a first sending module, configured to send a first request to an LMF, in which the first request is used for requesting position information of a first UE, the first request includes identifier information of at least one candidate UE, and the at least one candidate UE is used to determine a second UE for SL positioning of the first UE.

In some embodiments, the apparatus further includes: a first receiving module, configured to receive a second request sent by a first device, in which the second request is used for requesting the position information of the first UE.

In some embodiments, the first device includes a LCS client or an AF.

In some embodiments, the first receiving module is configured to: receive a first response sent by the LMF, in which the first response includes first positioning information, and the first positioning information indicates the position information of the first UE.

In some embodiments, the apparatus further includes: a first determining module, configured to determine the LMF based on first information, in which the first information includes available information and/or local configuration.

According to a sixth aspect of embodiments of the disclosure, a positioning apparatus is provided. The apparatus includes:
a second receiving module, configured to receive a first request sent by an AMF, in which the first request is used for requesting position information of a first UE, the first request includes identifier information of at least one candidate UE, and the at least one candidate UE is used to determine a second UE for SL positioning of the first UE.

In some embodiments, the apparatus further includes: a second sending module, configured to send the first request to the first UE.

In some embodiments, the second receiving module is configured to: receive second positioning information and identifier information of the second UE corresponding to the second positioning information sent by the first UE, in which the second positioning information indicates relative position information between the first UE and the second UE.

In some embodiments, the apparatus further includes: a second processing module, configured to determine first positioning information of the first UE based on the second positioning information and third positioning information, in which the third positioning information indicates position information of the second UE, and the first positioning information indicates the position information of the first UE.

In some embodiments, the second sending module is configured to: send a first response to the AMF, in which the first response includes the first positioning information.

According to a seventh aspect of embodiments of the disclosure, a positioning apparatus is provided. The apparatus includes:
a third receiving module, configured to receive a first request sent by an LMF, in which the first request is used for requesting position information of the first UE, the first request includes identifier information of at least one candidate UE, and the at least one candidate UE is used to determine a second UE for SL positioning of the first UE.

In some embodiments, the apparatus further includes: a third processing module, configured to determine the second UE related with the SL positioning based on the identifier information of the at least one candidate UE.

In some embodiments, the third processing module is configured to: obtain second positioning information based on the SL positioning related with the second UE, in which the second positioning information indicates relative position information between the first UE and the second UE.

In some embodiments, the apparatus further includes: a third sending module, configured to send the second positioning information and identifier information of the second UE corresponding to the second positioning information to the LMF.

According to an eighth aspect of embodiments of the disclosure, a positioning apparatus is provided. The apparatus includes:
a fourth sending module, configured to send a first request to a first UE, in which the first request is used for requesting position information of the first UE, the first request includes identifier information of at least one candidate UE, and the at least one candidate UE is used to determine a second UE for SL positioning of the first UE.

In some embodiments, the apparatus further includes: a fourth receiving module, configured to receive second positioning information and identifier information of the second UE corresponding to the second positioning information sent by the first UE, in which the second positioning information indicates relative position information between the first UE and the second UE.

In some embodiments, the apparatus further includes: a fourth processing module, configured to determine first positioning information of the first UE based on the second positioning information and third positioning information, in which the third positioning information indicates position information of the second UE, and the first positioning information indicates the position information of the first UE.

In some embodiments, the fourth sending module is configured to send a first response to a first device, in which the first response includes the first positioning information, or the first response includes the first positioning information and the identifier information of the second UE.

In some embodiments, the fourth receiving module is configured to: receive a second request sent by the first device, in which the second request is used for requesting the position information of the first UE.

In some embodiments, the first device includes a LCS client or an AF.

According to a ninth aspect of the disclosure, a positioning system is provided, including an AMF, an LMF and a first UE.

The AMF is configured to: receive a second request sent by a LCS client or an AF, in which the second request is used for requesting position information of the first UE; and send a first request to the LMF, in which the first request is used for requesting the position information of the first UE, the first request includes identifier information of at least one candidate UE, and the at least one candidate UE is used to determine a second UE for SL positioning of the first UE.

The LMF is configured to send the first request to the first UE.

In some embodiments, the first UE is configured to: determine a second UE based on the identifier information of the at least one candidate UE; obtain second positioning information based on the SL positioning related with the second UE, in which the second positioning information indicates relative position information between the first UE and the second UE; and send the second positioning information and identifier information of the second UE corresponding to the second positioning information to the LMF.

The LMF is configured to: determine first positioning information based on the second positioning information and third positioning information, in which the third positioning information indicates position information of the second UE, and the first positioning information indicates position information of the first UE; and send a first response including the first positioning information to the AMF.

In some embodiments, the AMF is configured to determine the LMF to send the first request.

According to a tenth aspect of the disclosure, a communication device is provided. The device includes:
a processor; and
a memory for storing instructions executable by the processor;
in which the processor is configured to implement the positioning method according to any embodiment of the disclosure when running the executable instructions.

According to an eleventh aspect of the disclosure, a computer storage medium is provided. The computer storage medium stores a computer executable program, and when the executable program is executed by a processor, the positioning method of any embodiment of the disclosure is realized.

The technical solutions provided by the embodiment of the disclosure include the following beneficial effects.

In the embodiment of the disclosure, the AMF sends the first request to the LMF, in which the first request is used for requesting the position information of the first UE, the first request includes identifier information of the at least one candidate UE, and the candidate UE is used to determine the second UE for SL positioning of the first UE. Therefore, the second UE used for SL positioning of the first UE is accurately determined based on the identifier information of the candidate UE provided by the AMF. That is, the second UE (a located UE) used for positioning the first UE (a target UE) is determined. When the position information of the first UE cannot be determined directly or is not determined correctly, the position information of the first UE can be determined based on the second UE within the coverage.

It should be understood that the above general description and the following detailed descriptions are exemplary and explanatory only and do not limit the embodiments of the disclosure.

### BRIEF DESCRIPTION OF THE DRAWINGS

FIG. 1 is a structural schematic diagram of a wireless communication system according to an example embodiment.
FIG. 2 is a schematic diagram illustrating position determination according to an example embodiment.
FIG. 3 is a schematic diagram illustrating network coverage according to an example embodiment.
FIG. 4 is another schematic diagram illustrating network coverage according to an example embodiment.
FIG. 5 is yet another schematic diagram illustrating network coverage according to an example embodiment.
FIG. 6 is a schematic diagram illustrating a positioning method according to an example embodiment.
FIG. 7 is a schematic diagram illustrating a positioning method according to an example embodiment.
FIG. 8 is a schematic diagram illustrating a positioning method according to an example embodiment.
FIG. 9 is a schematic diagram illustrating a positioning method according to an example embodiment.
FIG. 10 is a schematic diagram illustrating a positioning method according to an example embodiment.
FIG. 11 is a schematic diagram illustrating a positioning method according to an example embodiment.
FIG. 12 is a schematic diagram illustrating a positioning method according to an example embodiment.
FIG. 13 is a schematic diagram illustrating a positioning method according to an example embodiment.
FIG. 14 is a schematic diagram illustrating a positioning method according to an example embodiment.
FIG. 15 is a block diagram illustrating a positioning apparatus according to an example embodiment.
FIG. 16 is a block diagram illustrating a positioning apparatus according to an example embodiment.
FIG. 17 is a block diagram illustrating a positioning apparatus according to an example embodiment.
FIG. 18 is a block diagram illustrating a positioning apparatus according to an example embodiment.
FIG. 19 is a block diagram illustrating a UE according to an example embodiment.
FIG. 20 is a block diagram illustrating a base station according to an example embodiment.

### DETAILED DESCRIPTION

Reference will now be made in detail to example embodiments, examples of which are illustrated in the accompanying drawings. The following description refers to the accompanying drawings in which the same numbers in different drawings represent the same or similar elements unless otherwise represented. The implementations set forth in the following description of example embodiments do not represent all implementations consistent with the embodiments of the disclosure. Instead, they are merely examples of apparatuses and methods consistent with aspects related to the embodiments of the disclosure.

The terms used in the embodiments of the disclosure are only for the purpose of describing specific embodiments, and are not intended to limit the embodiments of the disclosure. The singular forms of "a" and "the" used in the embodiments of the disclosure or the attached claims are also intended to include plural forms, unless the context clearly indicates other meanings. It should also be understood that the term "and/or" as used herein refers to and includes any or all possible combinations of one or more associated listed items.

It is understandable that although the terms "first", "second" and "third" may be used in the embodiments of the disclosure to describe various information, the information should not be limited to these terms. These terms are only used to distinguish the same type of information from each other. For example, without departing from the scope of the embodiments of the disclosure, the first information may also be referred to as the second information, and similarly, the second information may also be referred to as the first information. Depending on the context, the term "if" as used herein may be interpreted as "when", "while" or "in response to determining".

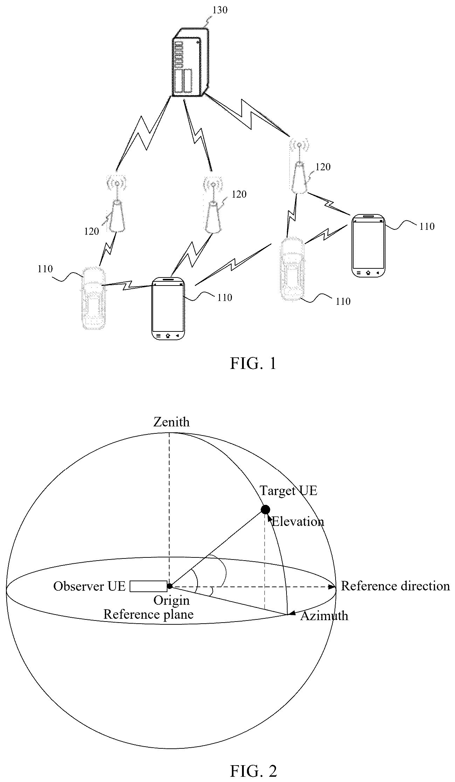

FIG. 1 is a structural schematic diagram of a wireless communication system according to an embodiment of the disclosure.

As illustrated in FIG. 1, the wireless communication system includes several user equipments (UEs) 110 and several access network devices 120. The wireless communication system may be a 4th Generation mobile communication system (4G), also known as Long Term Evolution (LTE) system. Or, the wireless communication system may also be a 5G system, also known as New Radio (NR) system or 5G NR system. Or, the wireless communication system may be any next generation system of the 5G system.

The UE 110 may be a device that provides voice and/or data connectivity to a user. The UE 110 may communicate with one or more core networks via a radio access network (RAN). The UE 110 may be an Internet of Things (IoT) UE, such as a sensor device, a cell phone (or "cellular" phone), and a computer with the IoT UE, for example, a stationary, portable, pocket-sized, handheld, computer-built, or vehicle-mounted device, such as, a Station (STA), a subscriber unit, a subscriber station, a mobile station, a mobile, a remote station, an access point, a remote terminal, an access terminal, a user terminal, a user agent or a UE. Alternatively, the UE 110 may also be an unmanned aerial vehicle device. Or, the UE 110 may also be an in-vehicle device, for example, a vehicle-mounted computer having a wireless communication function or a wireless UE external connected to the vehicle-mounted computer. Alternatively, the UE 110 may also be a roadside device, for example, a street light, a signal light or other roadside devices having the wireless communication function.

The access network device 120 may be a network side device in the wireless communication system. The access network device 120 may be an evolved base station (eNB) employed in the 4G system. Or, the access network device 120 may be a base station (gNB) with a centralized distributed architecture employed in the 5G system. Or, the access network device 120 may be an access network in the 5G system, which may be called a new generation-RAN (NG-RAN). When the access network device 120 adopts a centralized-distributed architecture, it usually includes a central unit (CU) and at least two distributed units (DUs). The CU is provided with protocol stacks of a Packet Data Convergence Protocol (PDCP) layer, a Radio Link Control (RLC) layer and a Media Access Control (MAC) layer. The DU is provided with a protocol stack of a physical (PHY) layer, and the specific implementation of the access network device 120 is not limited in the embodiment of the disclosure.

A wireless connection may be established between the access network device 120 and the UE 110 via a radio interface. In different implementations, the radio interface is a radio interface based on the 4G standard. Or, the radio interface is a radio interface based on the 5G standard, such as a NR. Or, the radio interface may be a radio interface based on a next generation mobile communication system standard beyond 5G.

In some embodiments, End to End (E2E) connections are established between the UEs 110 in scenarios, such as, Vehicle to Vehicle (V2V) communication, Vehicle to Infrastructure (V2I) communication, and Vehicle to Pedestrian (V2P) communication in Vehicle to Everything (V2X) communication.

The above-mentioned UE may be considered as the terminal in the following embodiments.

In some embodiments, the above wireless communication system may also include a core network device 130.

Several access network devices 120 are connected to the core network device 130, respectively. The core network device 130 may be a core network device in the wireless communication system. For example, the core network device 130 is a Mobility Management Entity (MME) in an Evolved Packet Core (EPC). Or, the core network device may be other core network devices, such as a Serving GateWay (SGW), a Public Data Network GateWay (PGW), a Policy and Charging Rules Function (PCRF), or a Home Subscriber Server (HSS), etc. Or, the core network device 130 may also be a core network device in 5G, such as a Policy Control Function (PCF), a Session Management Function (SMF), an AMF, a Unified Data Management (UDM) or a User Plane Function (UPF), etc. The implementation form of the core network device 130 is not limited in the embodiment of the disclosure.

In order to facilitate understanding by those skilled in the art, the embodiments of the disclosure list a plurality of implementations to clearly illustrate the technical solutions of the embodiments of the disclosure. Certainly, those skilled in the art understand that the embodiments of the disclosure may be executed independently, or the embodiments of the disclosure may be executed together with the methods of other embodiments of the disclosure, or the embodiments of the disclosure may be executed with some methods in related arts, which is not limited by the embodiment of the disclosure.

In order to better understand the technical solutions described in any embodiment of the disclosure, firstly, positioning technologies in related arts are partially explained.

In an embodiment, ranging service refers to the determination of the distance between two UEs and/or the direction of one UE from the other one via direct communication connection.

In an embodiment, as illustrated in FIG. 2, an observer UE has a reference plane and a reference direction. The direction of a target UE to the observer UE is an angle of a line between the observer UE and the target UE to the reference direction. It is represented by its Azimuth direction and Elevation direction. The Azimuth direction of the target UE is an angle formed between the reference direction and the line from the observer UE to the target UE projected on the same plane as the reference direction orthogonal to the zenith. The Elevation direction of the target UE is an angle above the horizontal plane.

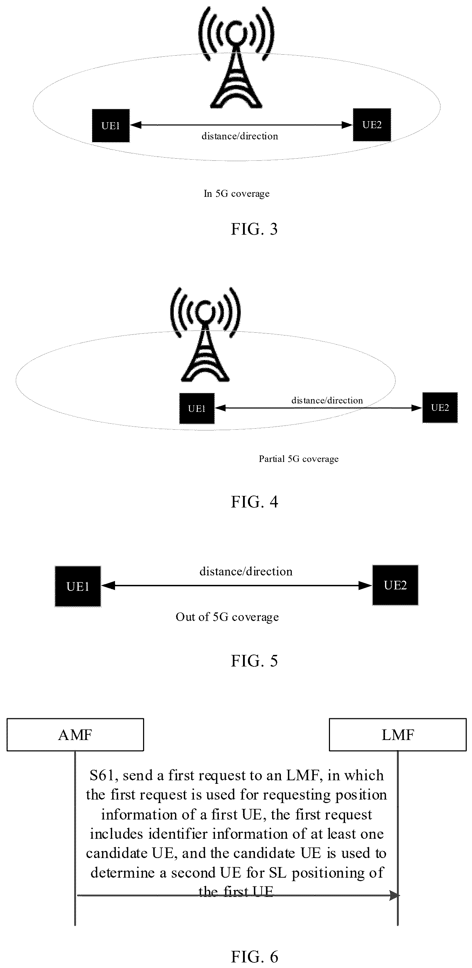

In an embodiment, ranging service is supported with or without 5G coverage. FIG. 3 provides an illustration of 5G coverage, in which both UE1 and UE2 are in 5G coverage. FIG. 4 provides an illustration of partial 5G coverage, in which UE1 is in 5G coverage and UE2 is out of 5G coverage. FIG. 5 provides an illustration of out of 5G coverage, in which UE1 and UE2 are out of 5G coverage. In an embodiment, when the licensed band is used for ranging, it is fully controlled by an operator.

In an embodiment, ranging is used for relative positioning between 2 UEs. An existing location solution defined in TS 23.273 depends on measurement information between a UE and multiple gNBs. It assumes that the target UE has to have network connections. The measurement between the target UE and multiple gNBs may consume a lot of power, which is unaffordable for UEs with stringent power constraint. Besides, the accuracy of positioning heavily relies on a number of Line of Sight (LoS) paths. In a complex indoor environment, LoS paths may be blocked by (semi-)static objects like high shelters in a warehouse or moving objects like trucks, leading to positioning inaccuracy or failure. The UE may serve as a simplified node to provide more potential LoS paths in order to assist a 5G system (5GS) for positioning of the target UE.

In an embodiment, for the case of in 5G coverage, a position of UE2 is derived based on an absolute position of UE1 and ranging information of UE2. Some use cases include: some wearable devices are usually used together with a cell phone, by knowing relative positions between the wearable device and the cell phone, a position of the wearable device may be derived; a Unmanned Aerial Vehicle (UAV) with network connection may be used to find a lost object, by knowing the relative positions between the lost object and the UAV, a position of the lost object may be derived; for positions of a group of UEs which always work in the same area, the position of any UE in the group may be derived based on the position of another UE; a position of a UE with no LoS path to the gNB.

As illustrated in FIG. 6, the embodiment of the disclosure provides a positioning method. The method is performed by an AMF, and includes the following steps.

At step S61, a first request is sent to an LMF, in which the first request is used for requesting position information of a first UE, the first request includes identifier information of at least one candidate UE, and the at least one candidate UE is used to determine a second UE for SL positioning of the first UE.

The AMF and the LMF of the embodiment of the disclosure, as well as the LCS client and the AF involved below, may be logic nodes or functions that are flexibly deployed in the communication network. Or, the AMF, the LMF and the AF may be logic nodes or functions that are flexibly deployed in a core network. Or, the AMF, the LMF, the LCS client and/or the AF may be network elements of operators. Or, the AMF and/or the LMF may be network elements of operators, and the LCS clients and/or the AF may be third-party network elements.

The first UE, the second UE, and the candidate UE in the embodiment of the disclosure may all be, but are not limited to, various mobile terminals or fixed terminals, such as mobile phones, computers, servers, wearable devices, game control platforms or multimedia devices. In an embodiment, the first UE is a target UE, and the second UE is a located UE for positioning the target UE. In an embodiment, the candidate UE includes at least one second UE.

In some embodiments of the disclosure, "at least one" means one or more, and "a plurality of" means two or more.

The embodiment of the disclosure provides a positioning method. The method is performed by the AMF, and includes sending the first request to the LMF.

In an embodiment, the first request is a location request.

In an embodiment, the first request is used to request for positioning the first UE. Positioning the first UE obtains the position information of the first UE.

In an embodiment, the first request is used to request the position information based on the SL positioning, or the first request is used to request the positioning based on the SL positioning. The first request is used to request the position information of the first UE based on the SL positioning within a network coverage, such as 5G coverage.

In an embodiment, the first request is used to request position information based on the SL positioning related with the second UE, or the first request is used to request a positioning based on the SL positioning related with the second UE. The SL positioning is a SL positioning between the second UE and the first UE. The second UE is a UE used for positioning the first UE within the network coverage.

In an embodiment, the identifier information of the at least one candidate UE is used for the first UE to discover the second UE. The first UE discovers the second UE for positioning itself based on the identifier information of the at least one candidate UE.

In an embodiment, the first request includes UE list information consisting the identifier information of the at least one candidate UE. In the embodiment of the disclosure, the UE list information may be carried in the first request.

In other embodiments, the first request may include any other information that is used for indicating the identifier information of at least one candidate UE, such as a set of identifier information consisting the identifier information of the at least one candidate UE. The information carried in the first request is not limited here, as long as it indicates the at least one candidate UE.

In an embodiment, the identifier information of the candidate UE may include any type of identifier information that can be used to uniquely identify the candidate UE. The identifier information includes at least one character. The identifier information of the candidate UE may include, but is not limited to, a name, an address, a subscription concealed identifier (SUCI), a subscriber permanent identifier (SUPI), a globally unique temporary UE identity (GUTI), a serial number or an index of the candidate UE.

The embodiment of the disclosure provides a positioning method performed by the AMF, and includes determining the identifier information of the at least one candidate UE.

In an embodiment, determining the identifier information of the at least one candidate UE, includes at least one of: determining a UE within a preset range to the first UE as a candidate UE according to a last position of the first UE; determining the identifier information of the candidate UE; or determining the identifier information of the candidate UE from a ranging constellation obtained from the AF or the LCS client.

In an embodiment, the last position may be the first UE last known location.

In an embodiment, the ranging constellation may include available located UEs for positioning the first UE within a certain area maintained by the AF or the LCS client.

In an embodiment, the AMF obtains the ranging constellation from the AF or the LCS client in a direct or indirect manner. For example, the indirect acquisition of the ranging constellation occurs when the AMF obtains the ranging constellation from the AF or the LCS client via the LMF.

In the embodiment of the disclosure, the AMF sends the first request to the LMF, in which the first request is used for requesting the position information of the first UE, the first request includes the identifier information of the at least one candidate UE, and the candidate UE is used to determine the second UE for SL positioning of the first UE. Therefore, the second UE for SL positioning of the first UE is accurately determined based on the identifier information of the candidate UE provided by the AMF. That is, the second UE (the located UE) used for positioning the first UE (the target UE) is determined. When the position information of the first UE cannot be determined directly or is not determined correctly, the position information of the first UE may be determined based on the second UE within the coverage.

It should be noted that those skilled in the art understand that the methods provided by the embodiments of the disclosure may be performed independently or together with some methods in the embodiments of the disclosure or some methods in related arts.

The embodiment of the disclosure provides a positioning method performed by the AMF, and includes receiving a second request sent by a first device, in which the second request is used for requesting the position information of the first UE.

In an embodiment, the second request may be a location request. Different from the first request, the second request does not include the identifier information of the at least one candidate UE. The second request may be used to request the positioning of the first UE. Or, the second request is used to request position information based on the SL positioning. Or, the second request is used to request a positioning based on the SL positioning. For example, the second request is used to request position information based on an SL positioning related with the second UE. Or, the second request is used to request a positioning based on the SL positioning related with the second UE.

In an embodiment, the first device includes a LCS client or an AF.

The embodiment of the disclosure provides a positioning method performed by the AMF, and includes sending the first request to the LMF based on the received second request. The first request and the second request in the embodiment of the disclosure may be the first request and the second request in the above embodiment, respectively.

In the embodiment of the disclosure, the AMF sends the first request for positioning the target UE to the LMF after receiving the second request for positioning the target UE sent by the LCS client or the AF. The first request includes the identifier information of the at least one candidate UE, based on which, the second UE (i.e., located UE) for positioning the target UE can be determined.

It should be noted that those skilled in the art understand that the methods provided by the embodiments of the disclosure can be performed independently or together with some methods in the embodiments of the disclosure or some methods in related arts.

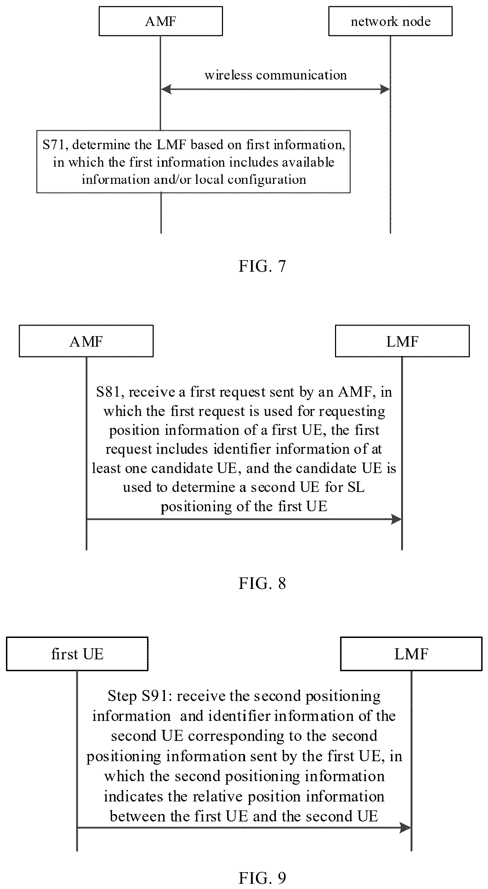

As illustrated in FIG. 7, the embodiment of the disclosure provides a positioning method performed by the AMF, and includes the following steps.

At step S71, the LMF is determined based on first information, in which the first information includes available information and/or local configuration.

In an embodiment, the AMF selects the LMF used to send the first request.

In an embodiment, the available information may indicate whether an LMF ID is available in a context of UE positioning of the first UE. For example, if the available information indicates that the LMF ID is available in the context of UE positioning of the first UE, it is determined that the AMF is able to select the LMF corresponding to the LMF ID.

In an embodiment, the local configuration may include, but is not limited to, at least one of the following: at least one LMF ID, an LMF ID corresponding to the first UE or the context of UE positioning.

In other embodiments, the available information may be other types of information that indicates whether the LMF is available, and/or, the local configuration information may be any other information used to indicate an LMF configured for the first UE and/or an LMF configured for the AMF, and the available information and/or the local configuration are not specifically limited here.

For example, the AMF may determine the LMF for positioning the target UE. If the LMF ID is available in the context of UE positioning of the first UE or the LMF ID is provided by the first UE, the AMF may determine that the LMF corresponding to the LMF ID as the LMF for positioning the target UE.

For example, if the LMF ID is available in the context of UE positioning of the first UE or the LMF ID is provided by the first UE, it is determined whether the LMF corresponding to the LMF ID is available first. If it is determined that the LMF is available, the LMF corresponding to the LMF ID is determined as the LMF for positioning the target UE. Or, if it is determined that the LMF is unavailable (e.g., it is not suitable for or cannot support the positioning of the first UE accessing a network or a serving cell for periodic or triggered positioning events), the AMF reselects the LMF.

For example, if the AMF determines that the LMF corresponding to the LMF ID is unavailable, or the LMF ID is unavailable in the context of UE positioning of the first UE, or the LMF ID is not provided by the first UE, the AMF may determine the LMF for positioning the target UE based on the LMF ID included in the local configuration.

In an embodiment, the LMF may execute step S71 under one of the following cases: in the case when the AMF receives the first request and the AMF determines to use the LMF for positioning the first UE, and in the case where an event report of subscribing to the first UE.

In an embodiment, when the AMF determines the LMF, it also needs to consider at least one of the following factors: a LCS client type, a LCS accuracy, a response time (delay), a first UE access type (3rd Generation Partnership Project (3GPP) access or non-3GPP access), a radio access type (RAT) (i.e., 5G NR or eLTE), an access node serviced for the first UE (gNB or NG-eNB), RAN configuration information, LMF capabilities, an LMF load, an LMF position or an indication of single event reporting.

In this way, in the embodiment of the disclosure, the LMF used for positioning the target UE (i.e., the first UE) may be accurately determined by the AMF, and there are various ways to determine the LMF, and thus it is applicable to more application scenarios.

It should be noted that those skilled in the art understand that the methods provided by the embodiments of the disclosure can be performed independently or together with some methods in the embodiments of the disclosure or some methods in related arts.

The embodiment of the disclosure provides a positioning method performed by the AMF, and includes receiving a first response sent by the LMF, in which the first response includes first positioning information that indicates the position information of the first UE.

In an embodiment, the first positioning information is an absolute position of the first UE.

In an embodiment, the first positioning information is determined based on second positioning information and third positioning information. The second positioning information is relative position information between the first UE and the second UE, and the third positioning information is position information of the second UE. The third positioning information may be an absolute position of the second UE. For example, based on the determined second UE, the UE may perform an SL positioning procedure to determine the relative position information between the first UE and the second UE (i.e., the second positioning information). The LMF may determine the absolute position information (i.e., the third positioning information) of the second UE based on the SL positioning procedure, and then determine the absolute position information (i.e., the first positioning information) of the first UE based on the relative position information between the first UE and the second UE and the absolute position of the second UE.

In an embodiment, the position information may be any type of information used to represent a position. For example, the position information may be longitude and latitude coordinates, a coordinate in a certain system, and/or a specific location (such as Building B in City A).

In an embodiment, the first response includes the first positioning information and identifier information of a second UE, so that the AMF may learn which located UE is used to determine the position of the first UE.

In the embodiment of the disclosure, the AMF may receive the first positioning information sent by the LMF, and learns the accurate position of the first UE.

The embodiment of the disclosure provides a positioning method performed by the AMF, and includes sending the first response to the LCS client or the AF, in which the first response includes the first positioning information, or the first response includes the first positioning information and the identifier information of the second UE. Therefore, the LCS client or the AF may accurately learn the position of the first UE, and/or learn the second UE (the located UE) for positioning the first UE (the target UE).

It should be noted that those skilled in the art understand that the methods provided by the embodiments of the disclosure may be performed independently or together with some methods in the embodiments of the disclosure or some methods in related arts.

The following positioning method is performed by the LMF, which is similar to the description of the positioning method performed by the AMF. The technical details not disclosed in the embodiments of the positioning method performed by the LMF may be found by referring to the description of the positioning method performed by the AMF, and are not be described in detail here.

As illustrated in FIG. 8, the embodiment of the disclosure provides a positioning method performed by the LMF, and includes the following steps.

At step S81, a first request sent by an AMF is received, in which the first request is used for requesting position information of a first UE, the first request includes identifier information of at least one candidate UE, and the candidate UE is used to determine a second UE for SL positioning of the first UE.

In some embodiments of the disclosure, the AMF and the LMF may be the AMF and the LMF in the above embodiments, respectively. The first UE, the second UE, and the candidate UE may be the first UE, the second UE and the candidate UE in the above embodiments, respectively. The identifier information of the candidate UE may be the identifier information of the candidate UE in the above embodiments. The first request may be the first request in the above embodiments.

For example, the first UE may be a target UE, and the second UE is a located UE for positioning the target UE.

For example, in an embodiment, the first request is a location request, which may be used to request to positioning the first UE. Positioning the first UE is to obtain the position information of the first UE. The first request may be used to request position information based on the SL positioning. Or, the first request may be used to request a positioning based on the SL positioning. Or, the first request may be used to request position information based on an SL positioning related with the second UE. Or, the first request may be used to request a positioning based on the SL positioning related with the second UE.

The embodiment of the disclosure provides a positioning method. The method is performed by the LMF and includes: sending the first request to the first UE. For example, the first request is for the UE to find the second UE, and/or the first request is used for the UE to perform the SL positioning related with the second UE after finding the second UE. The UE performs the SL positioning related with the second UE to obtain second positioning information, which is used to indicate relative position information between the first UE and the second UE.

Details of the above embodiments may refer to the description on the AMF side, which may not be repeated here.

It should be noted that those skilled in the art understand that the methods provided by the embodiments of the disclosure may be performed independently or together with some methods in the embodiments of the disclosure or some methods in related arts.

As illustrated in FIG. 9, the embodiment of the disclosure provides a positioning method performed by the LMF and includes:
Step S91: receiving the second positioning information sent by the first UE and identifier information of the second UE corresponding to the second positioning information, in which the second positioning information indicates the relative position information between the first UE and the second UE.

In an embodiment, the LMF may receive the second positioning information sent by the first UE.

In an embodiment, the identifier information of the second UE is used to uniquely identify the second UE. The identifier information of the second UE may be, but is not limited to, a name, an address, a SUCI, a SUPI, a GUTI, a serial number or an index of the second UE.

In an embodiment, the relative position information may be a distance and/or a direction. For example, the second positioning information indicates a distance between the first UE and the second UE and/or a direction of the first UE relative to the second UE.

In the embodiment of the disclosure, if the LMF receives the second positioning information and the identifier information of the second UE corresponding to the second positioning information sent by the first UE, it knows which located UE is to be used for positioning the first UE and the relative position information between the first UE and the second UE, which facilitate the LMF to determine the position of the first UE.

Details of the above embodiments may refer to the description on the AMF side, which may not be repeated here.

It should be noted that those skilled in the art understand that the methods provided by the embodiments of the disclosure may be performed independently or together with some methods in the embodiments of the disclosure or some methods in related arts.

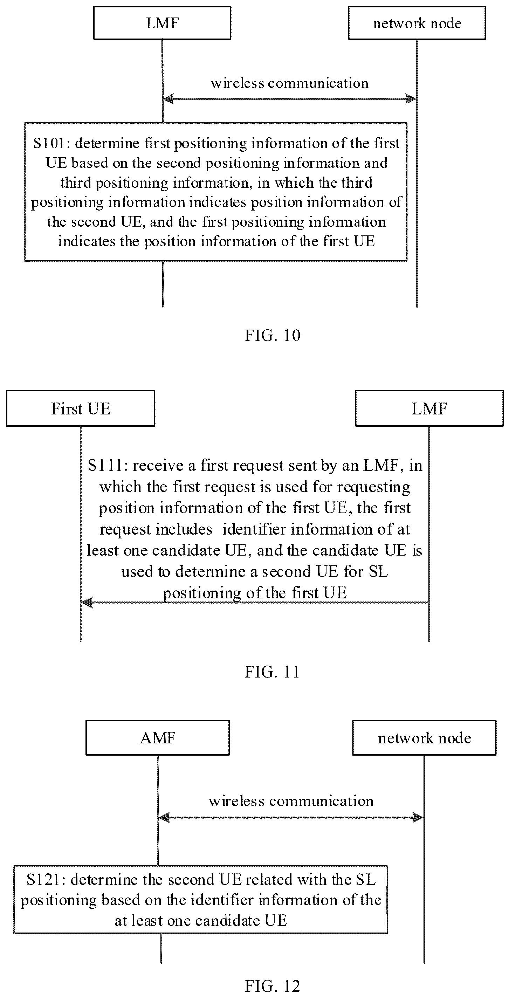

As illustrated in FIG. 10, the embodiment of the disclosure provides a positioning method performed by the LMF and includes:
Step S101: determining first positioning information of the first UE based on the second positioning information and third positioning information, in which the third positioning information indicates position information of the second UE, and the first positioning information indicates the position information of the first UE.

The embodiment of the disclosure provides a positioning method performed by the LMF and includes determining the third positioning information of the second UE. For example, the LMF determines the absolute position information of the second UE, that is, the third positioning information of the second UE, based on the positioning procedure. As another example, the LMF stores position information of potential UEs (including the second UE), such as geographic information and/or latitude and longitude coordinates of the second UE.

In an embodiment, the second positioning information is the relative position information between the first UE and the second UE, and the third positioning information may be the absolute position information of the second UE. The LMF receives the previous relative positions between the first UE and the second UE sent by the first UE, determines the absolute position information of the second UE, and determines the absolute position information of the first UE (i.e., the first positioning information) based on the relative position information between the first UE and the second UE and the absolute position information of the second UE.

In an embodiment, the position information may be any type of information that can be used to represent a position. For example, the position information may be longitude and latitude coordinates, a coordinate in a certain system, and/or a specific location (such as Building B in City A). The position information may refer to an absolute position.

In the embodiment of the disclosure, the LMF may accurately determine the position information of the first UE.

The embodiment of the disclosure provides a positioning method. The method is performed by the LMF and includes: sending the first response to the AMF, in which the first response includes the first positioning information.

In an embodiment, the first response includes the first positioning information and identifier information of the second UE, so that the AMF may learn which located UE is used to determine the position of the first UE.

The above implementations may refer to the description on the AMF side, which may not be repeated here.

It should be noted that those skilled in the art understand that the methods provided by the embodiments of the disclosure may be performed independently or together with some methods in the embodiments of the disclosure or some methods in related arts.

The following positioning method is performed by the first UE, which is similar to the above description of the positioning method performed by the AMF and/or the LMF. Moreover, the technical details not disclosed in the embodiment of the positioning method performed by the first UE may refer to the description of the positioning method performed by the AMF and/or the LMF, and may not be described in detail here.

As illustrated in FIG. 11, the embodiment of the disclosure provides a positioning method performed by a first UE and includes:
Step S111: receiving a first request sent by an LMF, in which the first request is used for requesting position information of the first UE, the first request includes identifier information of at least one candidate UE, and the candidate UE is used to determine a second UE for SL positioning of the first UE.

In an embodiment, the first request is received by the LMF from the AMF.

In some embodiments of the disclosure, the AMF and the LMF may be the AMF and the LMF in the above embodiments, respectively. The first UE, the second UE and the candidate UE may be the first UE, the second UE and the candidate UE in the above embodiments, respectively. The identifier information of the candidate UE may be the identifier information of the candidate UE in the above embodiments. The first request may be the first request in the above embodiments.

For example, the first UE may be a target UE, and the second UE is a located UE for positioning the target UE.

For example, in an embodiment, the first request is a location request, which may be used to request to positioning the first UE. Positioning the first UE is to obtain the position information of the first UE. The first request may be used to request position information based on the SL positioning. Or, the first request may be used to request a positioning based on the SL positioning. Or, the first request may be used to request position information based on an SL positioning related with the second UE. Or, the first request may be used to request a positioning based on the SL positioning related with the second UE.

The above implementations may refer to the description on the AMF side and/or the LMF side, which may not be repeated here.

It should be noted that those skilled in the art understand that the methods provided by the embodiments of the disclosure may be performed independently or together with some methods in the embodiments of the disclosure or some methods in related arts.

As illustrated in FIG. 12, the embodiment of the disclosure provides a positioning method. The method is performed by the first UE and includes:
Step S121: determining the second UE related with the SL positioning based on the identifier information of the at least one candidate UE.

In an embodiment, the second UE is a located UE for positioning the first UE. For example, the first UE discovers the second UE for positioning the first UE based on the identifier information of the at least one candidate UE.

For example, the first UE receives a first request including UE list information. The UE list information includes the identifier information of the at least one candidate UE. The first UE discovers the second UE according to the order in the list.

For example, the first UE sends discovery information consisting identifier information of the first UE, and the discovery information is used for requesting the SL positioning. The first UE receives a discovery response returned based on the candidate UE, the discovery response includes identifier information of the candidate UE and is used to indicate that the first UE is allowed to perform the SL positioning related with the corresponding candidate UE. The first UE determines the candidate UE corresponding to the identifier information of the candidate UE included in the discovery response as the second UE. In this way, the first UE may actively discover the second UE for positioning the first UE.

For example, the candidate UE may send broadcast information, the first UE monitors the broadcast information sent by the candidate UE. If it is determined that the identifier information of the candidate UE included in the broadcast information is the same as the identifier information of the candidate UE included in the first request, the candidate UE corresponding to the identifier information of the candidate UE is determined as the second UE. In this way, the second UE for positioning the first UE may be discovered by the first UE when monitoring broadcast information sent by nearby candidate UEs.

In the embodiment of the disclosure, the first UE may discover the second UE related with the SL positioning based on the identifier information of the at least one candidate UE. In this way, the first UE (i.e., the target UE) may accurately determine the located UE (i.e., the second UE) for positioning the target UE, which is beneficial to the subsequent determination of the relative position information between the first UE and the second UE.

The above implementations may refer to the description on the AMF side and/or the LMF side, which may not be repeated here.

It should be noted that those skilled in the art understand that the methods provided by the embodiments of the disclosure may be performed independently or together with some methods in the embodiments of the disclosure or some methods in related arts.

The embodiment of the disclosure provides a positioning method performed by the first UE and includes obtaining second positioning information based on the SL positioning related with the second UE, in which the second positioning information indicates relative position information between the first UE and the second UE.

The embodiment of the disclosure provides a positioning method performed by the first UE and includes sending the second positioning information and identifier information of a second UE corresponding to the second positioning information to the LMF.

In an embodiment, the first UE sends the second positioning information to the LMF.

The above implementations may refer to the description on the AMF side and/or the LMF side, which may not be repeated here.

It should be noted that those skilled in the art understand that the methods provided by the embodiments of the disclosure may be performed independently or together with some methods in the embodiments of the disclosure or some methods in related arts.

The following positioning method is performed by a core network element, which is similar to the above description of the positioning method performed by the AMF and/or the LMF and/or the first UE. Moreover, the technical details not disclosed in the embodiment of the positioning method performed by the core network element may refer to the description of the positioning method performed by the AMF and/or the LMF and/or the first UE, and may not be described in detail here.

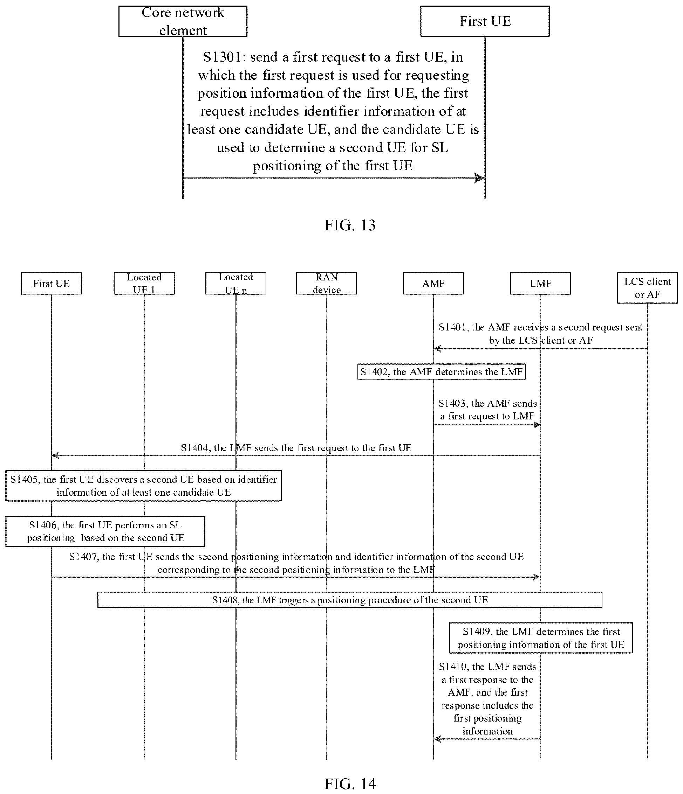

As illustrated in FIG. 13, the embodiment of the disclosure provides a positioning method performed by a core network element and includes:
Step S1301: sending a first request to a first UE, in which the first request is used for requesting position information of the first UE, the first request includes identifier information of at least one candidate UE, and the candidate UE is used to determine a second UE for SL positioning of the first UE.

In an embodiment, the core network element includes an AMF and/or an LMF.

In some embodiments of the disclosure, the AMF and the LMF may be the AMF and the LMF of the above embodiments, respectively. The first UE, the second UE and the candidate UE may be the first UE, the second UE and the candidate UE in the above embodiments, respectively. The first request and the identifier information of the candidate UE may be the first request and the identifier information of the candidate UE in the above embodiments, respectively.

For example, the first UE may be a target UE, and the second UE is a located UE for positioning the target UE.

For example, in an embodiment, the first request is a location request, which may be used to request to positioning the first UE. Positioning the first UE is to obtain the position information of the first UE. The first request may be used to request position information based on the SL positioning. Or, the first request may be used to request a positioning based on the SL positioning. Or, the first request may be used to request position information based on an SL positioning related with the second UE. Or, the first request may be used to request a positioning based on the SL positioning related with the second UE.

The embodiment of the disclosure provides a positioning method performed by the core network element and includes receiving second positioning information and identifier information of the second UE corresponding to the second positioning information sent by the first UE, in which the second positioning information indicates relative position information between the first UE and the second UE.

In some embodiments of the disclosure, the second positioning information and the identifier information of the second UE may be the second positioning information and the identifier information of the second UE in the above embodiments, respectively.

For example, the second positioning information indicates a distance between the first UE and the second UE and/or a direction of the first UE relative to the second UE.

For example, the identifier information of the second UE is used to uniquely identify the second UE. The identifier information of the second UE may be, but is not limited to, a name, an address, a SUCI, a SUPI, a GUTI, a serial number or an index of the second UE.

The embodiment of the disclosure provides a positioning method performed by the core network element and includes determining first positioning information of the first UE based on the second positioning information and third positioning information, in which the third positioning information indicates position information of the second UE, and the first positioning information indicates the position information of the first UE.

The embodiment of the disclosure provides a positioning method performed by the core network element and includes sending a first response to a first device, in which the first response includes the first positioning information, or the first response includes the first positioning information and the identifier information of the second UE.

In some embodiments of the disclosure, the first positioning information and the third positioning information may be the second positioning information and the third positioning information in the above embodiments, respectively. For example, the first positioning information may indicate absolute position information of the first UE, and the third positioning information may indicate absolute position information of the second UE.

In some embodiments, before sending the first request to the first UE, the method further includes: receiving a second request sent by the first device, in which the second request is used for requesting the position information of the first UE.

The embodiment of the disclosure provides a positioning method performed by the core network element and includes receiving a second request sent by the first device, in which the second request is used for requesting the position information of the first UE.

In some embodiments of the disclosure, the first device may be the first device in the above embodiments, and the second request may be the second request in the above embodiments.

For example, the first device includes a LCS client or an AF.

For example, the second request may be a location request. Different from the first request, the second request does not include the identifier information of the at least one candidate UE. The second request may be used to request the positioning of the first UE. Or, the second request is used to request position information based on the SL positioning. Or, the second request is used to request a positioning based on the SL positioning. For example, the second request is used to request position information based on an SL positioning related with the second UE. Or, the second request is used to request a positioning based on the SL positioning related with the second UE.

The above implementations may refer to the description on the AMF side and/or the LMF side and/or the first UE side, which may not be repeated here.

It should be noted that those skilled in the art understand that the methods provided by the embodiments of the disclosure may be performed independently or together with some methods in the embodiments of the disclosure or some methods in related arts.

In order to further explain any embodiment of that disclosure, several specific embodiments are provide below.

### Embodiment 1

As illustrated in FIG. 14, the embodiment of the disclosure provides a positioning method performed by a communication system, and includes an LCS client or an AF, an AMF, an LMF, an RAN device, a located UE1 (or a located UE n) and a first UE (i.e., the target UE). The positioning method includes the following steps.

At step S1401, the AMF receives a second request sent by the LCS client or the AF.

For example, the second request is a location request. The AMF receives the location request sent by the LCS client or the AF, and the location request is used to request position information of the first UE.

At step S1402, the AMF determines the LMF.

For example, the AMF selects the LMF based on available information and/or local configuration of the AMF. The LMF is used to determine the position information of the first UE.

At step S1403, the AMF sends a first request to the LMF.

For example, the AMF sends the first request to the LMF. The first request includes identifier information of at least one candidate UE, and the first request is used to request the position information of the first UE.

At step S1404, the LMF sends the first request to the first UE.

For example, the first UE is a target UE. The candidate UE is used to determine the second UE, and the second UE is a located UE. For example, the LMF sends the first request to the first UE, and the first request includes the identifier information of the at least one candidate UE. The at least one candidate UE includes one or more located UEs.

At step S1405, the first UE discovers a second UE based on the identifier information of the at least one candidate UE.

For example, the first UE performs a discovery procedure based on the identifier information of the at least one candidate UE to discover the second UE (i.e., the located UE) used for positioning the target UE (i.e., the first UE).

For example, the first request includes UE list information consisting the identifier information of the at least one candidate UE. Based on the UE list information provided by the LMF, the first UE performs the discovery procedure of the located UE (i.e. the second UE) according to the order in the list until the first available located UE is discovered.

At step S1406, the first UE performs an SL positioning procedure based on the second UE.

For example, after discovering the second UE, the first UE performs the SL positioning procedure based on the second UE to obtain second positioning information. The second positioning information indicates relative position information between the first UE and the second UE. Here, the second UE may be the located UE 1.

At step S1407, the first UE sends the second positioning information and a identifier information of the second UE corresponding to the second positioning information to the LMF.

For example, the first UE sends an SL positioning measurement data or result obtained based on the SL positioning procedure related with the second UE together with the identifier information of the second UE to the LMF. The SL positioning measurement data or result may include the second positioning information. For example, the located UE 1 may be the first available located UE discovered by the target UE in step S1305.

At step S1408, the LMF triggers a positioning procedure of the second UE.

For example, the LMF triggers the positioning procedure of the second UE (i.e., located UE) to obtain third positioning information indicating position information of the second UE. In an embodiment of the disclosure, the third positioning information indicates absolute position information of the second UE.

At step S1409, the LMF determines the first positioning information of the first UE.

For example, the LMF obtains the second positioning information and the third positioning information, and determines the first positioning information of the first UE based on the second positioning information and the third positioning information. The first positioning information indicates the position information of the first UE (i.e., the target UE). In an embodiment of the disclosure, the first positioning information indicates the absolute position of the first UE.

At step S1410, the LMF sends a first response to the AMF, and the first response includes the first positioning information.

For example, the first response may also include the identifier information of the second UE.

The above implementations may refer to the description on the AMF side and/or the LMF side and/or the first UE side, which may not be repeated here.

The embodiment may be arbitrarily combined with any other embodiment without conflict. The solutions (or optional solutions) in the embodiments may be combined without conflict. The solution in the embodiment may be combined with the solution in any other embodiment without conflict. The steps in the embodiment may be performed in a different order without conflict. Each step in the embodiment may be implemented independently or combined with any other step in the embodiment without conflict.

It should be noted that those skilled in the art understand that the methods provided by the embodiments of the disclosure may be performed independently or together with some methods in the embodiments of the disclosure or some methods in related arts.

### Embodiment 2

The embodiment of the disclosure provides a positioning system that includes: an AMF, an LMF and a first UE.

The AMF is configured to receive a second request sent by an LCS or an AF, in which the second request is used to request position information of the first UE; and send a first request to the LMF, in which the first request is used for requesting the position information of the first UE, and the first request includes identifier information of at least one candidate UE. The candidate UE is used to determine the second UE for SL positioning of the first UE.

The LMF is configured to send the first request to the first UE.

The embodiment of the disclosure provides the positioning system that includes: the AMF, the LMF and the first UE.

The first UE is configured to determine a second UE based on the identifier information of the at least one candidate UE; obtain second positioning information based on the SL positioning related with the second UE, in which the second positioning information indicates relative position information between the first UE and the second UE; and send the second positioning information and identifier information of the second UE corresponding to the second positioning information to the LMF.

The LMF is configured to determine first positioning information based on the second positioning information and third positioning information, in which the third positioning information indicates position information of the second UE, and the first positioning information indicates the position information of the first UE; and send a first response consisting the first positioning information to the AMF.

The embodiment of the disclosure provides a positioning system that includes an AMF, an LMF and a first UE. The AMF is configured to determine the LMF for sending the first request.

The above implementations may refer to the description on the AMF side and/or the LMF side and/or the first UE side, which may not be repeated here.

The embodiment may be arbitrarily combined with any other embodiment without conflict. The solutions (or optional solutions) in the embodiments may be combined without conflict. The solution in the embodiment may be combined with the solution in any other embodiment without conflict. The steps in the embodiment may be performed in a different order without conflict. Each step in the embodiment may be implemented independently or combined with any other step in the embodiment without conflict.

It should be noted that those skilled in the art understand that the methods provided by the embodiments of the disclosure may be performed independently or together with some methods in the embodiments of the disclosure or some methods in related arts.

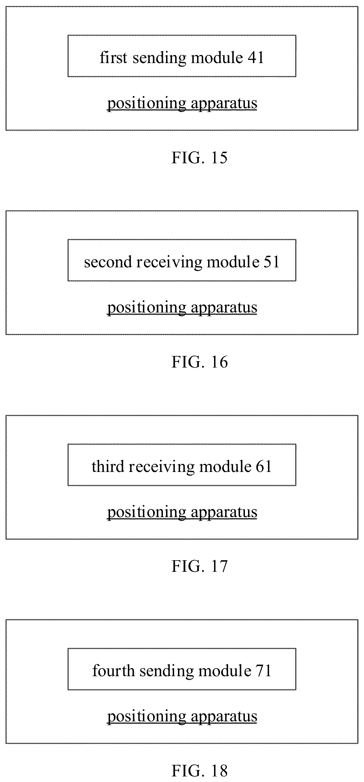

As illustrated in FIG. 15, the embodiment of the disclosure provides a positioning apparatus that includes:

a first sending module 41, configured to send a first request to an LMF, in which the first request is used for requesting position information of a first UE, the first request includes identifier information of at least one candidate UE, and the candidate UE is used to determine a second UE for SL positioning of the first UE.

The positioning apparatus provided by the embodiment of the disclosure may be an AMF.

The apparatus further includes a first receiving module, configured to receive a second request sent by a first device, in which the second request is used for requesting the position information of the first UE.

In some embodiments, the first device includes a LCS client or an AF.

The first receiving module is further configured to receive a first response sent by the LMF, in which the first response includes first positioning information that is used to indicate the position information of the first UE.

The apparatus further includes: a first determining module, configured to determine the LMF based on first information, in which the first information includes available information and/or local configuration.

As illustrated in FIG. 16, the embodiment of the disclosure provides a positioning apparatus that includes:
a second receiving module 51, configured to receive a first request sent by an AMF, in which the first request is used for requesting position information of a first UE, the first request includes identifier information of at least one candidate UE, and the candidate UE is used to determine a second UE for SL positioning of the first UE.

The apparatus further includes: a second sending module, configured to send the first request to the first UE.

The second receiving module 51 is further configured to receive second positioning information sent by the first UE and identifier information of the second UE corresponding to the second positioning information, in which the second positioning information is used for indicating relative position information between the first UE and the second UE.

The apparatus further includes a second processing module, configured to determine first positioning information of the first UE based on the second positioning information and third positioning information, in which the third positioning information indicates position information of the second UE, and the first positioning information indicates the position information of the first UE.

The second sending module is further configured to send a first response to the AMF, in which the first response includes the first positioning information.

As illustrated in FIG. 17, the embodiment of the disclosure provides a positioning apparatus that includes:
a third receiving module 61, configured to receive a first request sent by an LMF, in which the first request is used for requesting position information of the first UE, the first request includes identifier information of at least one candidate UE, and the candidate UE is used to determine a second UE for SL positioning of the first UE.

The apparatus further includes a third processing module, configured to determine the second UE related with the SL positioning based on the identifier information of the at least one candidate UE.

The third processing module is further configured to obtain second positioning information based on the SL positioning related with the second UE, in which the second positioning information indicates relative position information between the first UE and the second UE.

The apparatus further includes a third sending module, configured to send the second positioning information and identifier information of the second UE corresponding to the second positioning information to the LMF.

As illustrated in FIG. 18, the embodiment of the disclosure provides a positioning apparatus that includes:
a fourth sending module 71, configured to send a first request to a first UE, in which the first request is used for requesting position information of the first UE, the first request includes identifier information of at least one candidate UE, and the candidate UE is used to determine a second UE for SL positioning of the first UE.

The positioning apparatus provided by the embodiment of the disclosure may be a core network element.

The apparatus further includes a fourth receiving module, configured to receive second positioning information and identifier information of the second UE corresponding to the second positioning information sent by the first UE, in which the second positioning information indicates relative position information between the first UE and the second UE.

The apparatus further includes a fourth processing module, configured to determine first positioning information of the first UE based on the second positioning information and third positioning information, in which the third positioning information indicates position information of the second UE, and the first positioning information indicates the position information of the first UE.

The fourth sending module 71 is configured to send a first response to a first device, in which the first response includes the first positioning information, or the first response includes the first positioning information and identifier information of the second UE.

The fourth receiving module is further configured to receive a second request sent by the first device, in which the second request is used for requesting the position information of the first UE.

In some embodiments, the first device includes a LCS client or an AF.

It should be noted that those skilled in the art understand that the apparatus provided by the embodiment of the disclosure execute independently or together with some apparatuses in the embodiments of the disclosure or some apparatuses in related arts.

For the apparatus in the above embodiment, the specific way in which each module performs operations has been described in detail in the method embodiments, and will not be described in detail here.

The embodiment of the disclosure provides a communication device. The device includes:
a processor; and
a memory for storing instructions executable by the processor;
in which the processor is configured to implement the positioning method according to any embodiment of the disclosure when running the executable instructions.

In an embodiment, the communication device may include, but is not limited to, at least one of an AF, an LMF, a first UE, an LCS client or an AF.

The processor includes various types of storage mediums, which are non-transitory computer storage mediums and can continue to remember information stored on UEs after power failure.

The processor may be connected to the memory through a bus or the like for reading the executable programs stored on the memory, for example, at least one of the methods shown in FIGS. 6 to 14.

The embodiment of the disclosure also provides a computer storage medium. The computer storage medium stores a computer executable program, and when the executable program is executed by a processor, the positioning method of any embodiment of the disclosure is realized, i.e., at least one of the methods shown in FIGS. 6-14.

For the apparatuses or the storage medium in the above embodiments, the specific way in which each module performs its corresponding operation has been described in detail in the method embodiments and will not be described in detail here.

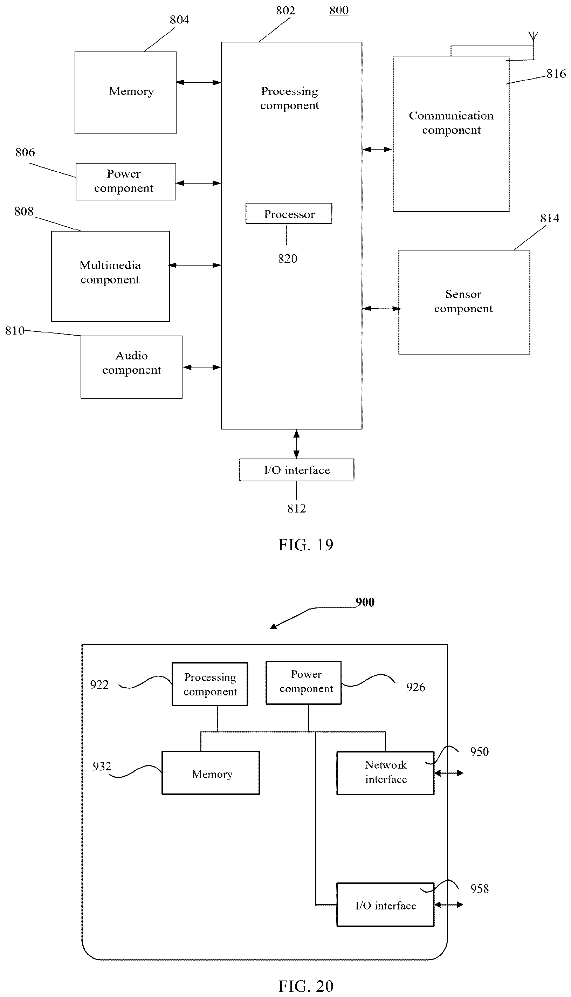

FIG. 19 is a block diagram illustrating a UE 800 according to an example embodiment. For example, the UE 800 may be a mobile phone, a computer, a digital broadcasting UE, a message transceiver device, a game console, a tablet device, a medical device, a fitness device or a personal digital assistant.

As illustrated in FIG. 19, the UE 800 includes one or more of the following components: a processing component 802, a memory 804, a power component 806, a multimedia component 808, an audio component 810, an input/output (I/O) interface 812, a sensor component 814 and a communication component 816.

The processing component 802 typically controls overall operations of the UE 800, such as the operations associated with display, telephone calls, data communications, camera operations, and recording operations. The processing component 802 may include one or more processors 820 to perform all or part of the steps in the above described methods. Moreover, the processing component 802 may include one or more modules which facilitate the processing component 802 to interact with other components. For example, the processing component 802 may include a multimedia module to facilitate interactions between the multimedia component 808 and the processing component 802.

The memory 804 is configured to store various types of data to support the operation of the UE 800. Examples of such data include instructions for any applications or methods operated on the UE 800, contact data, phonebook data, messages, pictures, video, etc. The memory 804 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic or optical disk.

The power component 806 provides power to various components of the UE 800. The power component 806 may include a power management system, one or more power sources, and any other components associated with the generation, management, and distribution of power in the UE 800.

The multimedia component 808 includes a screen providing an output interface between the UE 800 and the user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensors to sense touches, swipes, and gestures on the touch panel. The touch sensor may not only sense a boundary of a touch or swipe action, but also sense a period of wakeup time and a pressure associated with the touch or swipe action. In some embodiments, the multimedia component 808 includes a front-facing camera and/or a rear-facing camera. When the UE 800 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 810 is configured to output and/or input audio signals. For example, the audio component 810 includes a microphone (MIC) configured to receive an external audio signal when the UE 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the UE 800. For instance, the sensor component 814 may detect an open/closed status of the UE 800, relative positioning of components, e.g., the display and the keypad, of the UE 800, a change in position of the UE 800 or a component of the UE 800, a presence or absence of user contact with the UE 800, an orientation or an acceleration/deceleration of the UE 800, and a change in temperature of the UE 800. The sensor component 814 may include a proximity sensor configured to detect the presence of nearby objects without any physical contact. The sensor component 814 may also include a light sensor, such as a Complementary Metal Oxide Semiconductor (CMOS) or Charge-Coupled Device (CCD) image sensor, for use in imaging applications. In some embodiments, the sensor component 814 may also include an accelerometer sensor, a gyroscope sensor, a magnetic sensor, a pressure sensor or a temperature sensor.

The communication component 816 is configured to facilitate communication, wired or wirelessly, between the UE 800 and other devices. The UE 800 can access a wireless network based on a communication standard, such as Wi-Fi, 4G or 5G, or a combination thereof. In an example embodiment, the communication component 816 receives a broadcast signal or broadcast associated information from an external broadcast management system via a broadcast channel. In an example embodiment, the communication component 816 further includes a Near Field Communication (NFC) module to facilitate short-range communication. For example, the NFC module may be implemented based on a Radio Frequency identification (RFID) technology, an Infrared Data Association (IrDA) technology, an Ultra-Wide Band (UWB) technology, a Blue Tooth (BT) technology, and other technologies.

In some exemplary embodiments, the UE 800 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the above described methods.

In some example embodiments, there is also provided a non-transitory computer readable storage medium including instructions, such as the memory 804, executable by the processor 820 in the UE 800, for performing the above methods. For example, the non-transitory computer-readable storage medium may be a ROM, a Random Access Memory (RAM), a CD-ROM, a magnetic tape, a floppy disc and an optical data storage device.

FIG. 20 is a block diagram illustrating a base station according to an example embodiment. For example, the base station 900 may be provided as a network side device. As illustrated in FIG. 20, the base station 900 includes a processing component 922 consisting of one or more processors, and memory resources represented by a memory 932 for storing instructions executable by the processing component 922, such as applications. The application programs stored in the memory 932 may include one or more modules each corresponding to a set of instructions. In addition, the processing component 922 is configured to execute the instructions to perform any of the methods described above that are applicable to the base station.

The base station 900 may also include a power component 926 configured to perform power management of the base station 900, a wired or wireless network interface 950 configured to connect the base station 900 to a network, and an I/O interface 958. The base station 900 may operate based on an operating system stored in the memory 932, such as Windows Server ^{™}, Mac OS X^{™}, Unix^{™}, Linux^{™}, FreeBSD^{™}, or the like.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and embodiments are being considered as illustrative only, with a true scope and spirit of the disclosure being indicated by the attached claims.

It will be appreciated that the disclosure is not limited to the exact construction that has been described above and illustrated in the accompanying drawings, and that various modifications and changes can be made without departing from the scope thereof. It is intended that the scope of the disclosure is limited only by the attached claims.

## Claims

1. A positioning method, performed by an access and mobility management function (AMF), comprising:
sending a first request to a location management function (LMF), wherein the first request is used for requesting position information of a first user equipment (UE), the first request comprises identifier information of at least one candidate UE, and the at least one candidate UE is used to determine a second UE for sidelink (SL) positioning of the first UE.

2. The method of claim 1, further comprising:
receiving a second request sent by a first device, wherein the second request is used for requesting the position information of the first UE.

3. The method of claim 2, wherein the first device comprises a location service (LCS) client or an application function (AF).

4. The method of any one of claims 1-3, further comprising:
receiving a first response sent by the LMF, wherein the first response comprises first positioning information, and the first positioning information indicates the position information of the first UE.

5. The method of any one of claims 1-3, further comprising:
determining the LMF based on first information, wherein the first information comprises available information and/or local configuration.

6. A positioning method, performed by a location management function (LMF), comprising:
receiving a first request sent by an access and mobility management function (AMF), wherein the first request is used for requesting position information of a first user equipment (UE), the first request comprises identifier information of at least one candidate UE, and the at least one candidate UE is used to determine a second UE for sidelink (SL) positioning of the first UE.

7. The method of claim 6, further comprising:
sending the first request to the first UE.

8. The method of claim 7, further comprising:
receiving second positioning information and identifier information of the second UE corresponding to the second positioning information sent by the first UE, wherein the second positioning information indicates relative position information between the first UE and the second UE.

9. The method of claim 8, further comprising:
determining first positioning information of the first UE based on the second positioning information and third positioning information, wherein the third positioning information indicates position information of the second UE, and the first positioning information indicates the position information of the first UE.

10. The method of claim 9, further comprising:
sending a first response to the AMF, wherein the first response comprises the first positioning information.

11. A positioning method, performed by a first user equipment (UE), comprising:
receiving a first request sent by a location management function (LMF), wherein the first request is used for requesting position information of the first UE, the first request comprises identifier information of at least one candidate UE, and the at least one candidate UE is used to determine a second UE for sidelink (SL) positioning of the first UE.

12. The method of claim 11, further comprising:
determining the second UE related with the SL positioning based on the identifier information of the at least one candidate UE.

13. The method of claim 11 or 12, further comprising:
obtaining second positioning information based on the SL positioning related with the second UE, wherein the second positioning information indicates relative position information between the first UE and the second UE.

14. The method of claim 13, further comprising:
sending the second positioning information and identifier information of the second UE corresponding to the second positioning information to the LMF.

15. A positioning method, performed by a core network element, comprising:
sending a first request to a first user equipment (UE), wherein the first request is used for requesting position information of the first UE, the first request comprises identifier information of at least one candidate UE , and the at least one candidate UE is used to determine a second UE for sidelink (SL) positioning of the first UE.

16. The method of claim 15, further comprising:
receiving second positioning information and identifier information of the second UE corresponding to the second positioning information sent by the first UE, wherein the second positioning information indicates relative position information between the first UE and the second UE.

17. The method of claim 16, further comprising:
determining first positioning information of the first UE based on the second positioning information and third positioning information, wherein the third positioning information indicates position information of the second UE, and the first positioning information indicates the position information of the first UE.

18. The method of claim 17, further comprising:
sending a first response to a first device, wherein the first response comprises the first positioning information, or the first response comprises the first positioning information and the identifier information of the second UE.

19. The method of any one of claims 15-18, wherein before sending the first request to the first UE, the method further comprises:
receiving a second request sent by the first device, wherein the second request is used for requesting the position information of the first UE.

20. The method of claim 18, wherein the first device comprises a location service (LCS) client or an application function (AF).

21. A positioning apparatus, comprising:
a first sending module, configured to send a first request to a location management function (LMF), wherein the first request is used for requesting position information of a first user equipment (UE), the first request comprises identifier information of at least one candidate UE, and the at least one candidate UE is used to determine a second UE for sidelink (SL) positioning of the first UE.

22. A positioning apparatus, comprising:
a second receiving module, configured to receive a first request sent by an access and mobility management function (AMF), wherein the first request is used for requesting position information of a first user equipment (UE), the first request comprises identifier information of at least one candidate UE, and the at least one candidate UE used to determine a second UE for sidelink (SL) positioning of the first UE.

23. A positioning apparatus, comprising:
a third receiving module, configured to receive a first request sent by a location management function (LMF), wherein the first request is used for requesting position information of the first UE, the first request comprises identifier information of at least one candidate UE, and the at least one candidate UE is used to determine a second UE for sidelink (SL) positioning of the first UE.

24. A positioning apparatus, comprising:
a fourth sending module, configured to send a first request to a first user equipment (UE), wherein the first request is used for requesting position information of the first UE, the first request comprises identifier information of at least one candidate UE, and the at least one candidate UE is used to determine a second UE for sidelink (SL) positioning of the first UE.

25. A positioning system, comprising: an access and mobility management function (AMF), a location management function (LMF) and a first user equipment (UE);
wherein the AMF is configured to: receive a second request sent by a location service (LCS) client or an application function (AF), wherein the second request is used for requesting position information of the first UE; and send a first request to the LMF, wherein the first request is used for requesting the position information of the first UE, the first request comprises identifier information of at least one candidate UE, and the at least one candidate UE is used to determine a second UE for sidelink (SL) positioning of the first UE; and
the LMF is configured to send the first request to the first UE.

26. A communication device, comprising:
a processor; and
a memory for storing instructions executable by the processor;
wherein the processor is configured to implement the positioning method according to any one of claims 1-5, claims 6-10, claims 11-14 or claims 15-20 when running the executable instructions.

27. A computer storage medium, wherein the computer storage medium stores a computer executable program, and when the computer executable program is executed by a processor, the positioning method according to any one of claims 1-5, claims 6-10, claims 11-14 or claims 15-20 is implemented.
